# EUROPÄISCHE PATENTSCHRIFT

(11) **EP 4 184 264 B1**
(45) Veröffentlichungstag und Bekanntmachung des Hinweises auf die Patenterteilung: **28.01.2026**
(21) Anmeldenummer: 22206491.7
(22) Anmeldetag: 09.11.2022
(51) Int. Cl.: G05B 19/418, G05B 23/02

(54) **VERFAHREN UND VORRICHTUNG ZUR ÜBERWACHUNG EINES ZYKLISCHEN ARBEITSPROZESSES**
METHOD AND DEVICE FOR MONITORING A CYCLIC WORKING PROCESS
PROCÉDÉ ET DISPOSITIF DE SURVEILLANCE D'UN PROCESSUS DE TRAVAIL CYCLIQUE

(30) Priorität: 22.11.2021 DE 102021130482
(43) Veröffentlichungstag der Anmeldung: 24.05.2023
(73) Patentinhaber: Schuler Pressen GmbH, 73033 Göppingen (DE)
(72) Erfinder: METZGER, Alexander, 73054 Eislingen (DE); MENCKE, Robert, 73035 Göppingen (DE); GAO, Miaomiao, 73529 Schwäbisch Gmünd (DE)
(74) Vertreter: Rüger Abel Patentanwälte PartGmbB

(56) Entgegenhaltungen:
- DE-A1- 102018 100 424
- KAN CHEN ET AL: "Parallel computing and network analytics for fast Industrial Internet-of-Things (IIoT) machine information processing and condition monitoring", JOURNAL OF MANUFACTURING SYSTEMS., vol. 46, 1 January 2018 (2018-01-01), US, pages 282 - 293, XP093031727, ISSN: 0278-6125, DOI: 10.1016/j.jmsy.2018.01.010
- METZ DANIEL ET AL: "Self-Learning Monitoring and Control of Manufacturing Processes Based on Rule Induction and Event Processing", INTERNET, 1 January 2012 (2012-01-01), XP093031723, Retrieved from the Internet <URL:http://personales.upv.es/thinkmind/dl/conferences/eknow/eknow_2012/eknow_2012_4_20_60107.pdf> [retrieved on 20230315]

## Beschreibung

Die Erfindung betrifft ein Verfahren zur Überwachung eines zyklischen Arbeitsprozesses sowie eine Vorrichtung zur Durchführung eines zyklischen Arbeitsprozesses aufweisend eine Überwachungseinrichtung, die zur Überwachung des zyklischen Arbeitsprozesses eingerichtet ist. Bei dem zyklischen Arbeitsprozess kann es sich beispielsweise um das Bearbeiten eines Werkstücks handeln, insbesondere durch ein Umformverfahren und/oder ein Trennverfahren.

DE 10 2018 100 424 A1 beschreibt ein Verfahren zur Überwachung eines zyklischen Prozessablaufs in einer Maschine zum Bearbeiten von Werkstücken. Dabei werden Eingangssignale aus unbekannten Quellen empfangen und verarbeitet. Zunächst werden die sich zeitlich ändernden Eingangsdaten extrahiert und in ein vorgegebenes Format gebracht. Anschließend werden diese Daten mit Mustern verglichen, um prädiktiv anhand des Mustervergleichs die zukünftige Steuerung des Prozessablaufs zu beeinflussen. Es handelt sich sozusagen um eine prädiktive Steuerung.

Die Künstliche Intelligenz (KI) kann generell zu verschiedenen Zwecken in unterschiedlichen Bereichen verwendet werden. Basierend auf Modellen und der Beschleunigungserfassung eines Werkzeugs schlägt CN 111476430 A vor, die Lebensdauer des Werkzeugs vorherzusagen. Mittels Mustererkennung ist es beispielsweise auch möglich, den Schlaf- und Wachzyklus von Neugeborenen basierend auf einem EEG zu ermitteln (CN 111513675 A).

WO 2020/159649 A1 beschreibt allgemein ein Verfahren zur Erzeugung von kategorisierten Trainingsdaten als Eingangsgröße für das Training.

Abhängig von den Vorrichtungen zur Durchführung von zyklischen Arbeitsprozessen und insbesondere deren Steuerung kann es bei der Erfassung und Bereitstellung von Messwerten zu Zeitverzögerungen kommen, die unbekannt sind bzw. variieren können. Wenn der Messzeitpunkt eines Messwertes in einem zyklischen Prozess nicht exakt bestimmt werden kann, lassen sich aktuelle Abweichungen von einem gewünschten Sollwert nur unzureichend feststellen. Beispielsweise kann es zu zeitverzögerten Übermittlungen von Messwerten mit unbekannter Verzögerungsdauer kommen, wenn Messwerte mittels einer seriellen Datenübertragung übermittelt werden und die Anfragen in der Reihenfolge des Eingangs abgearbeitet werden. Zeitverzögerungen können auftreten, wenn Messwerte beispielsweise mittels einer speicherprogrammierbaren Steuerung (SPS, Englisch: Programmable Logic Controller PLC) bereitgestellt werden.

Ausgehend vom Stand der Technik kann es daher als Aufgabe der vorliegenden Erfindung angesehen werden, eine Auswertung von Messwerten in Echtzeit durchzuführen, deren Messzeitpunkt sich nicht exakt bestimmen lässt.

Diese Aufgabe wird durch ein Verfahren mit den Merkmalen des Patentanspruches 1 sowie eine Vorrichtung mit den Merkmalen des Patentanspruches 15 gelöst.

Das erfindungsgemäße Verfahren ist dazu eingerichtet, einen zyklischen Arbeitsprozess zu überwachen. Bei dem zyklischen Arbeitsprozess handelt es sich insbesondere um einen Arbeitsprozess zur Bearbeitung eines Werkstücks. Dabei kann in jedem Zyklus des Arbeitsprozesses ein anderes Werkstück bearbeitet werden. Das Bearbeiten des Werkstücks erfolgt bei einem Ausführungsbeispiel durch Umformen des Werkstücks und/oder durch Abtrennen wenigstens eines Werkstückteils vom Werkstück. Der Arbeitsprozess kann beispielsweise das Bearbeiten des Werkstücks durch Tiefziehen, Fließpressen, Abstreckgleitziehen, Prägen, Schneiden, Stanzen, Biegen oder eine beliebige Kombination davon umfassen. Zur Überwachung werden Messwerte für einen Arbeitsparameter in einer bekannten zeitlichen Reihenfolge erfasst, so dass eine Messwert-Datenreihe für den Arbeitsparameter vorliegt. Der exakte Messzeitpunkt jedes Messwertes ist jedoch unbestimmt. Zumindest nicht jeder Messwert der Messwert-Datenreihe lässt sich einem exakten Messzeitpunkt zuordnen.

Der Arbeitsparameter kann beispielsweise bei einem Umformverfahren und/oder Trennverfahren unter Verwendung einer Presse, eine Presskraft, eine Stößelposition, ein Drehmoment eines Motors zur Durchführung der Stößelbewegung oder ähnliches sein. Das erfindungsgemäße Verfahren kann auch für mehrere Arbeitsparameter eines Arbeitsverfahrens verwendet werden.

Basierend auf den Messwerten und/oder einem optional verfügbaren Zyklussignal wird jeweils ein Zyklusbeginn und ein Zyklusende eines und vorzugsweise mehrerer Arbeitszyklen ermittelt, während denen zumindest ein Teil der Messwerte erfasst wurde und/oder erfasst wird. Dann kann wenigstens eine Messwertgruppe gebildet werden, zu der diejenigen Messwerte gehören, die dem Zeitraum zwischen einem ermittelten Zyklusbeginn und einem ermittelten Zyklusende eines der Arbeitszyklen zugeordnet werden. Jede Messwertgruppe stellt somit die Messwerte für den Arbeitsparameter während eines einzigen Arbeitszyklus dar. Im zeitlichen Übergang zwischen dem Ende eines Arbeitszyklus und dem Beginn des darauffolgenden Arbeitszyklus kann es bei der zeitlichen Zuordnung der Messwerte unter Umständen zu fehlerhaften Zuordnungen einzelner Messwerte kommen. Diese Ungenauigkeit ist für das weitere Verfahren unkritisch.

Die wenigstens eine gebildete Messwertgruppe kann für einen Vergleich mit gespeicherten Mustern verwendet werden. Dabei ist es möglich, die mehreren Messwertgruppen vor dem Vergleich zunächst weiterzuverarbeiten, beispielsweise mittels mathematischer und/oder statistischer Methoden. Jedenfalls wird basierend auf der wenigstens einen Messwertgruppe der Messwertverlauf für einen Arbeitszyklus gebildet und zum Vergleich verwendet. Im einfachsten Fall kann der Messwertverlauf basierend auf einer einzigen ausgewählten Messwertgruppe ermittelt werden.

Der Messwertverlauf wird anschließend mit gespeicherten Mustern verglichen. Ein gespeichertes Muster wird als Arbeitsmuster ausgewählt, wenn basierend auf dem Vergleich eine ausreichende Übereinstimmung (ausreichende Ähnlichkeit oder Identität) zwischen dem Messwertverlauf und dem gespeicherten Muster festgestellt wird. Wenn keines der Muster eine ausreichende Übereinstimmung mit dem Messwertverlauf aufweist, kann der Messwertverlauf dazu verwendet werden, ein zusätzliches Muster zu bilden, das dann als gespeichertes Muster für weitere Vergleiche verwendet werden kann. Das derart gebildete zusätzliche Muster kann alternativ als Arbeitsmuster verwendet werden. Wenn keines der Muster eine ausreichende Übereinstimmung mit dem Messwertverlauf aufweist ist es zusätzlich oder alternativ möglich, eine Meldung auszugeben, dass kein Arbeitsmuster erkannt werden konnte. Die Meldung kann das Hinterlegen eines geeigneten gespeicherten Musters auslösen, so dass zukünftig ein Arbeitsmuster für den ermittelten Messwertverlauf zur Verfügung steht.

Um die spätere Erkennung einer Abweichung im aktuellen Arbeitszyklus zu verfeinern, kann bei gleichem Arbeitsprozess geprüft werden, ob ein für diesen Arbeitsprozess bereits vorhandenes Muster als Arbeitsmuster eingesetzt werden kann. Der gleiche Arbeitsprozess liegt beispielsweise dann vor, wenn das gleiche Werkzeug zur Bearbeitung des gleichen Werkstücks verwendt wird. Diese Information (Werzeugtyp, Werkstücktyp, etc.) zur Identifikation des Arbeitsprozesses kann den abgespeicherten Mustern zugeordnet werden. Dennoch können auch bei gleichem Werkzeug und/oder Werkstück Unterschiede im Arbeitszyklus auftreten, beispielsweise durch metallurgische Abweichungen im Werkstück oder ein nachbearbeitetes Werkzeug. Daher muss z.B. nach einem Werkzeugwechsel ein passendes Arbeitsmuster in der Mustersammlung für die gleichen Einstellungen des Arbeitsprozesses gesucht und gefunden werden oder ein neues Arbeitsmuster trainiert werden. Die Auswahl eines Arbeitsmusters kann also zweistufig erfolgen:
1. Auswählen eines Musters als Arbeitsmuster basierend auf der Identifikation des aktuell ausgeführten Arbeitsprozesses (beispielsweise durch die Erkennung/Identifikation des Werkzeugtyps uns/oder Werkstücktyps).
2. Wenn das gemäß Ziffer 1. ausgewählte Arbeitsmuster keine ausreichende Ähnlichkeit hat zu den Messwerten bzw. Messswertverläufen des aktuellen Arbeitsprozesses kann ein neues Muster erstellt und abgespeichert werden.

Wenn ein Arbeitsmuster ausgewählt oder generiert wurde, können mehrere aktuelle Messwerte der erfassten Messwerte in Echtzeit mit dem Arbeitsmuster verglichen werden. Dadurch lässt sich bereits während eines aktuellen Arbeitszyklus durch die in bekannter Reihenfolge eingehenden, aktuellen Messwerte erkennen, ob es eine Abweichung zwischen dem ausgewählten Arbeitsmuster für den Arbeitsparameter und den aktuellen Messwerten des Arbeitsparameters gibt. Wird eine Abweichung festgestellt, die ein Abweichungskriterium erfüllt, wird als eine Maßnahme das Ausgeben eines Ausgangssignals eingeleitet. Das Ausgangssignal kann eine Meldung über die Abweichung auslösen oder beinhalten und/oder das automatische Anpassen des Arbeitsprozesses veranlassen, um die Abweichung zu reduzieren oder zu eliminieren. Die Meldung über die Abweichung kann beispielsweise auch eine Empfehlung für geänderte Einstellungen des Arbeitsprozesses enthalten. Dazu kann auf hinterlegten Zusammenhängen zwischen Einstellungen des Arbeitsprozesses und dem Arbeitsparameter zurückgegriffen werden.

Als Abweichungskriterium kann beispielsweise ein Schwellenwert für den Betrag der Abweichung oder eine Mindestzeitdauer für das Vorliegen einer Abweichung oder eine Kombination davon verwendt werden. Grundsätzlich können zusätzlich oder alternativ auch andere statistische Größen, wie Standardabweichung oder Varianz zur Definition des Abweichungskriteriums verwendet werden.

Das Bilden des Messwertverlaufes und/oder das Vergleichen des Messwertverlaufes mit gespeicherten Mustern und/oder das Hinterlegen von Mustern kann mit Hilfe von Künstlicher Intelligenz (KI) durchgeführt werden. Beispielsweise können die gespeicherten Muster trainierte Muster und/oder durch Maschinenlernen erzeugte gespeicherte Muster sein.

Vorzugsweise werden die Messwerte in mehrere Messwertgruppen unterteilt. Der Messwertverlauf kann dann basierend auf mehreren oder sämtlichen der gebildeten Messwertgruppen erfolgen. Beispielsweise kann ein zeitlicher Verlauf eines Mittelwertes als Messwertverlauf während einer Zyklusdauer verwendet werden. Aus den Messwerten der für die Bildung des Messwertverlaufs herangezogenen Messwertgruppen kann für jeden Zeitpunkt der Mittelwert ermittelt und daraus dann der zeitliche Verlauf des Mittelwertes als Messwertverlauf gebildet werden.

Bei einem Ausführungsbeispiel wird der zeitliche Verlauf des Mittelwertes mittels einer Regressionsanalyse, einer gleitenden Mittelwertbildung oder eines anderen geeigneten mathematischen oder statistischen Verfahrens gebildet. Dabei kann es vorteilhaft sein, abhängig von einem vorgegebenen Kriterium eines von mehreren verfügbaren Verfahren auszuwählen. Bei einer bevorzugten Ausführungsform wird zur Ermittlung des zeitlichen Verlaufs des Mittelwertes die Regressionsanalyse verwendet, sofern die erfassten Messwerte ein vorgegebenes Datenkriterium nicht oder noch nicht erfüllen. Der zeitliche Verlauf des Mittelwertes kann mit Hilfe einer gleitenden Mittelwertbildung ermittelt werden, wenn die erfassten Messwerte das vorgegebene Datenkriterium erfüllen. Das Datenkriterium kann beispielsweise dann erfüllt sein, wenn Messwerte über eine vorgegebene Mindestanzahl von Arbeitszyklen für den Arbeitsparameter verfügbar sind, so dass eine vorgegebene Mindestanzahl an Messwertgruppen gebildet werden kann. Optional kann wenigstens eine der nachfolgenden Bedingungen eine notwendige, aber vorzugsweise nicht hinreichende Vorraussetzung für das Erfüllen des Datenkriteriums sein:
- für die erreichte vorgegebene Mindestanzahl an Messwertgruppen wurde dasselbe Arbeitsmuster verwendet wurde und das Datenkriterium insbesondere nur solange erfüllt ist, wie dieses oder ein ausreichend ähnliches Arbeitsmuster verwendet wird.
- die für die erreichte vorgegebene Mindestanzahl an Messwertgruppen verwendeten Messwertgruppen weisen untereinander eine ausreichende Ähnlichkeit auf.
Die Unterschiede bzw. die Ähnlichkeit zwischen Messwertgruppen untereinander und/oder zwischen einer Messwergruppe und einem Muster kann beispielsweise mittels mathematischer Verfahren geprüft werden, z.B. Faltung und/oder Kreuzkorrelation.

Die erfassten Messwerte können in einem Messwertspeicher gespeichert werden. Für die weitere Verarbeitung der erfassten Messwerte, beispielsweise für den Vergleich mit dem Arbeitsmuster können die in dem Messwertspeicher gespeicherten bzw. zwischengespeicherten Messwerte verwendet werden. Der Zugriff auf den Messwertspeicher ist in Echtzeit möglich.

Es ist vorteilhaft, wenn das Arbeitsmuster basierend auf zusätzlichen Messwerten aus wenigstens eier weiteren zweiten Messwertquelle geprüft und/oder geändert wird. Die wenigstens eine weitere Messwertquelle leifert zusätzliche Messwerte für denselben Arbeitsparameter. Die zusätzlichen Messwerte der wenigstens einen weiteren Messwertquelle sind dabei insbesondere unabhängig von denen der ersten Messwertquelle.

Die erfindungsgemäße Vorrichtung ist zur Durchführung eines zyklischen Arbeitsprozesses eingerichtet. Bei der Vorrichtung kann es sich beispielsweise um eine Presse oder eine andere Vorrichtung mit einem Werkzeug zur Bearbeitung eines Werkstücks handeln, das einen zyklischen Arbeitsprozess ausführt. Beispielsweise kann ein Stößel, ein Ziehkissen oder ein andere Maschinenkomponente, die das Werkzeug trägt, eine zyklisch wiederholte Bewegung ausführen. Die Vorrichtung weist eine Überwachungseinrichtung auf, die dazu eingerichtet ist, den zyklischen Arbeitsprozess zu überwachen und dabei ein Verfahren durchzuführen, das insbesondere einem der vorstehend beschriebenen Ausführungsbeispiele entsprechen kann.

Vorteilhafte Ausgestaltungen der Erfindung ergeben sich aus den abhängigen Ansprüchen, der Beschreibung und den Zeichnungen. Anhand der beigefügten Zeichnungen werden nachfolgend bevorzugte Ausführungsbeispiele im Einzelnen erläutert. In den Zeichnungen zeigen:
Figur 1 eine schematische, blockschaltbildähnliche Darstellung eines Ausführungsbeispiels einer Vorrichtung zur Durchführung eines zyklischen Arbeitsverfahrens,
Figur 2 eine schematische Darstellung eines zeitlichen Verlaufs eines Zyklussignals und der Zuordnung von erfassten Messwerten zu aufeinanderfolgenden Arbeitszyklen unter Verwendung des Zyklussignals,
Figur 3 eine schematische Darstellung der Bildung eines Messwertverlaufs aus mehreren Messwertgruppen, in die die erfassten Messwerte unterteilt wurden,
Figur 4 ein Blockschaltbild eines Ausführungsbeispiels eines erfindungsgemäßen Verfahrens und
Figur 5 Blockschaltbild eines weiteren Ausführungsbeispiels eines erfindungsgemäßen Verfahrens.

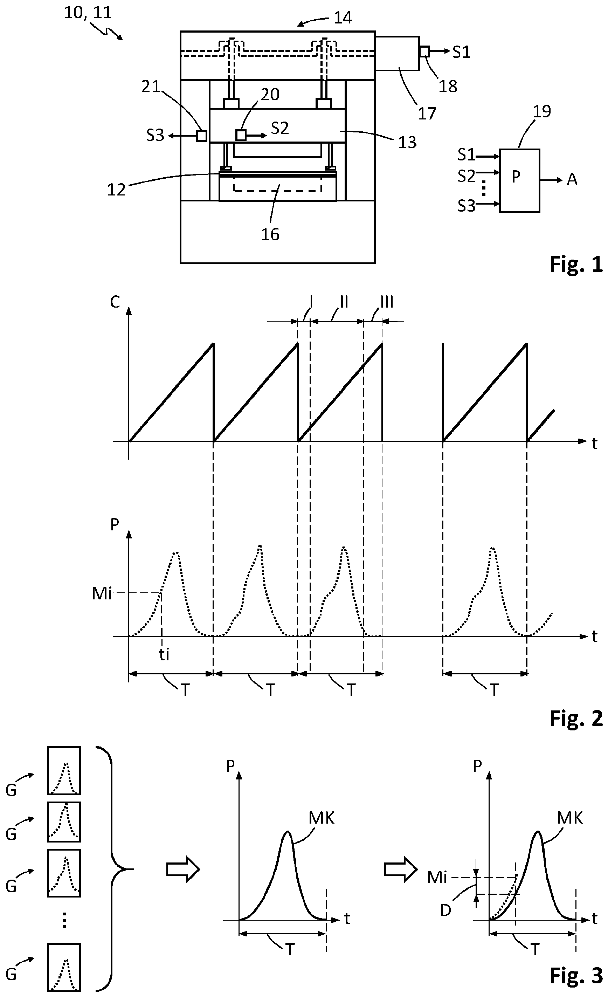

In Figur 1 ist schematisch eine Vorrichtung 10 zur Durchführung eines zyklischen Arbeitsprozesses veranschaulicht. Beispielsgemäß handelt es sich bei der Vorrichtung 10 um eine Presse 11 oder eine andere Vorrichtung 10, mittels der ein Werkstück 12 umgeformt und/oder wenigstens ein Teil des Werkstücks 12 abgetrennt werden kann. Die in Figur 1 schematisch dargestellte Presse 11 kann beispielsweise zur Durchführung eines Tiefziehverfahrens eingerichtet sein. In Abwandlung zu dem dargestellten Ausführungsbeispiel kann die Presse 11 oder die Vorrichtung 10 auch zur Durchführung eines oder mehrerer der folgenden Verfahren eingerichtet sein: Fließpressen, Abstreckgleitziehen, Stanzen, Prägen, Biegen, Schneiden, usw.

Die beispielsgemäß veranschaulichte Presse 11 hat einen Stößel 13, der mittels eines Antriebs 14 linear bewegbar gelagert ist. An dem Stößel 13 ist ein erstes Werkzeug 15 angeordnet, das mit einem an einem Pressentisch oder Pressengestell gelagerten zweiten Werkzeug 16 zum Umformen des Werkstücks 12 zusammenarbeitet. In Abwandlung zum dargestellten Ausführungsbeispiel wäre es auch möglich, das erste Werkzeug 15 stillstehend auszubilden und das zweite Werkzeug 16 mit Hilfe eines Ziehkissens zu bewegen. Auch eine Kombination mit zwei beweglichen Werkzeugen 15, 16 ist möglich. Wesentlich ist, dass die beiden Werkzeuge 15, 16 mittels des Antriebs 14 aufeinander zu und voneinander wegbewegt werden können, um das Werkstück 12 umzuformen und/oder anderweitig zu bearbeiten.

Bei dem in Figur 1 dargestellten Ausführungsbeispiel weist der Pressenantrieb 14 einen Elektromotor 17 auf, um den Stößel 13 zu bewegen. Der Antrieb 14 kann alternativ zum Elektromotor 17 einen Hydraulikzylinder oder eine sonstige Einrichtung aufweisen, um dzwischen den Werkzeugen 15, 16 eine Presskraft zu erzeugen.

Zur Messung wenigstens eines Arbeitsparameters P des zyklischen Arbeitsverfahrens weist die Vorrichtung 10 wenigstens einen Sensor auf. Zum Beispiel kann dem Elektromotor 17 ein erster Sensor 18 zugeordnet sein, der ein erstes Sensorsignal S1 erzeugt und an eine Überwachungseinrichtung 19 übermittelt. Das erste Sensorsignal S1 kann das Drehmoment des Elektromotors 17 beschreiben. Der erste Sensor 18 kann hierzu beispielsweise den Motorstrom des Elektromotors 17 ermitteln.

Zusätzlich oder alternativ kann ein zweiter Sensor 20 vorhanden sein, der ein zweites Sensorsignal S2 erzeugt und an die Überwachungseinrichtung 19 übermittelt. Das zweite Sensorsignal S2 kann beispielsweise eine Presskraft beschreiben, die beim Umformen auf das Werkstück 12 ausgeübt wird. Zusätzlich oder alternativ kann ein dritter Sensor 21 vorhanden sein, der ein drittes Sensorsignal S3 erzeugt und an die Überwachungseinrichtung 19 übermittelt. Das dritte Sensorsignal S3 kann zum Beispiel die Position des Stößels 13 und/oder die Relativposition zwischen dem ersten Werkzeug 15 und dem zweiten Werkzeug 16 beschreiben. Die Sensoren 18, 20, 21 sind lediglich beispielhaft genannt. Zur Überwachung des zyklischen Arbeitsverfahrens eignen sich abhängig von der jeweiligen konkreten Anwendung auch andere Arbeitsparameter P.

Im vorliegenden Fall wird als Arbeitsparameter P, der das zyklische Arbeitsverfahren beschreibt, der Motorstrom des Elektromotors 17 (charakterisiert durch das erste Sensorsignal S1) und/oder die Presskraft (charakterisiert durch das zweite Sensorsignal S2) und/oder die Stößelposition (charakterisiert durch das dritte Sensorsignal S3) und/oder ein anderer sensorisch erfasster Parameter der Vorrichtung 10 bzw. Presse 11 verwendet. Der Arbeitsparameter P wird durch Messwerte Mi (i=1, 2, 3,...) charakterisiert, die in einer zeitlichen Reihenfolge nacheinander erfasst werden, beispielsweise durch einen der Sensoren 18, 20, 21.

Die Überwachungseinrichtung 19 ist dazu eingerichtet, ein Verfahren zur Überwachung des Arbeitsprozesses auszuführen, das nachfolgend anhand der Figuren 2-4 erläutert wird.

Die Übermittlung der Sensorsignale S1, S2, S3 an die Überwachungseinrichtung 19 kann beispielsweise mittelbar über wenigstense eine Steuerung (die jeweils als eine Messwertquelle 22, 23 dient) der Vorrichtung 10 erfolgen. Die erfassten Messwerte Mi werden der Überwachungseinrichtung 19 in einer zeitlich aufeinanderfolgenden, bekannten Reihenfolge bereitgestellt, jedoch sind die Messwerte Mi einer oder mehrerer oder aller vorhandenen Messwertquellen 22, 23 mit einer oder mehrere Unsicherheiten behaftet, wie z.B.:
1. Der exakte Messzeitpunkt ti eines oder mehrerer der Messwerte Mi ist bei einer der Messwertquellen (z. B. erste Messwertquelle 22) nicht exakt bestimmbar. Dies kann beispielsweise darauf zurückzuführen sein, dass die Messwerte Mi dieser Messwertquelle mit einer unbekannten und/oder variierenden Zeitverzögerung weitergeleitet werden.
2. Die Anzahl der Messwerte Mi pro Zeiteinheit (Samplingrate) einer der Messwertquellen (z. B. zweite Messwertquelle 23) ist gering und der zeitliche Verlauf des gemessenen Parameters daher nicht ausreichend genau bestimmbar.
3. Die Anzahl der Messwerte Mi einer der Messwertquellen stehen nur für eine Betriebsphase oder einen Betriebspunkt eines Arbeitszyklusses zur Verfügung, beispielsweise Signale von Näherungsschaltern oder Endlagenschaltern.

Die vorstehend beispielhaft genannten Unsicherheiten beeinträchtigen die Auswertung der aus den verfügbaren Messwertquellen stammenden Messwerte. Die Erfindung stellt die Möglichkeit zur Verfügung, um diese mit einer Unsicherheit behafteten Messwerte aus wenigstens einer Messwertquelle dennoch zuverlässig verwenden zu können. Insbesondere kann dabei auf zusätzliche oder genauere Sensoren verzichtet werden. Als Messwertquellen können eine oder mehrere der folgenden Komponenten dienen: eine Steuerung, insbesondere eine speicherprogrammierbare Steuerung (SPS), eine PC- oder Mikroprozessor-basierte Steuerung oder eine programmierbare Logik-Gatter-Anordnung (FPGA, Field Programmable Gate Array), ein Sensor (einschließlich optischer Sensoren wie eine Kamera), usw.

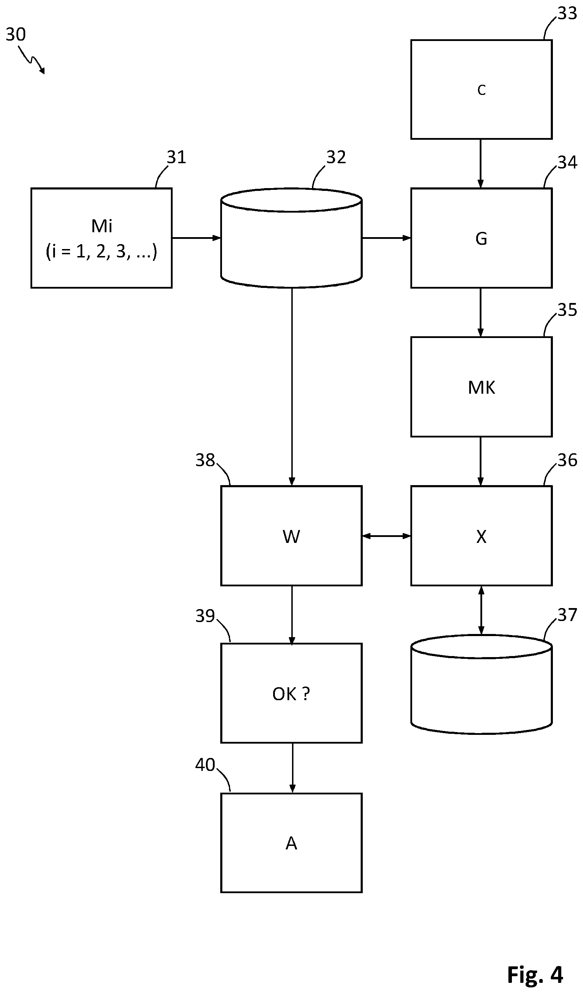

In Figur 4 ist ein Blockschaltbild eines Ausführungsbeispiels eines Verfahrens 30 dargestellt, bei dem in einem ersten Block 31 die Messwerte Mi in einer bekannten zeitlichen Reihenfolge und beispielsgemäß mit jeweils unbekanntem Messzeitpunkt ti erfasst werden. Die Messwerte Mi werden beispielsgemäß in einem Messwertspeicher 32 gespeichert und für den Zugriff bereitgestellt.

Beim Ausführungsbeispiel steht dem Verfahren 30 ein Zyklussignal C zur Verfügung (zweiter Block 33). Das Zyklussignal C definiert jeweils den Zyklusbeginn und das Zyklusende eines Arbeitszyklusses. Jeder Arbeitszyklus hat eine Zyklusdauer T. Jeder Arbeitszyklus ist definiert durch eine Periode des Zyklussignals C.

Ein Beispiel für ein Zyklussignal C ist in Figur 2 dargestellt. Zu einem ersten Zeitpunkt t1 beginnt ein erster Arbeitszyklus, der zu einem zweiten Zeitpunkt t2 endet. Zum zweiten Zeitpunkt t2 beginnt der darauffolgende Arbeitszyklus, der zu einem dritten Zeitpunkt t3 endet, usw. Die Arbeitszyklen schließen beispielsgemäß unmittelbar aneinander an.

In einem dritten Block 34 des Verfahrens 30 werden die Messwerte Mi den aufeinanderfolgenden Arbeitszyklen zugeordnet, die durch das Zyklussignal C bekannt sind. Die erfassten Messwerte Mi werden hierfür in Messwertgruppen G unterteilt, wobei jede Messwertgruppe G die Messwerte Mi eines gemeinsamen Arbeitszyklus enthält. In Figur 2 ist schematisch die Unterteilung der Messwerte Mi des Arbeitsparameters P in die Messwertgruppen G veranschaulicht.

Anschließend wird ein Messwertverlauf MK basierend auf wenigstens einer Messwertgruppe G und vorzugsweise basierend auf sämtlichen gebildeten Messwertgruppen G ermittelt (vierter Block 35). Der Messwertverlauf MK kann beispielsweise dem zeitlichen Verlauf des Mittelwerts der Messwerte Mi entsprechen. Der zeitliche Verlauf des Mittelwerts kann durch ein geeignetes mathematisches oder statistisches Verfahren berechnet werden.

Beim Ausführungsbeispiel wird hierfür entweder die Regressionsanalyse oder eine gleitende Mittelwertbildung verwendet, abhängig davon, ob die verfügbare Datenmenge der Messwerte Mi ein Datenkriterium erfüllt oder nicht. Das Datenkriterium ist beispielsweise erfüllt, wenn die Anzahl an verfügbaren Messwertgruppen G eine vorgegebene Anzahl überschreitet, das heißt, es stehen ausreichend viele Messwerte Mi für eine vorgegebene Mindestanzahl an Arbeitszyklen zur Verfügung. Ist das Datenkriterium erfüllt, kann der Messwertverlauf MK durch gleitende Mittelwertbildung aus den dazu verwendeten Messwertgruppen G ermittelt werden. Ist das Datenkriterium noch nicht erfüllt, kann der Messwertverlauf MK durch eine Regressionsanalyse basierend auf den verwendeten Messwertgruppen G berechnet werden. Die Bildung des Messwertverlaufs MK durch Mittelwertbildung ist stark schematisiert in Figur 3 dargestellt.

Beispielsgemäß ist eine notwendige Bedingung für das Datenkriterium, dass die Messwertgruppen G für die vorgegebene Mindestanzahl an Arbeitszyklen eine (ausreichende) Ähnlichkeit aufweisen, die ein vorgegebenes Ähnlichckeitskriterium erfüllt. Die Ähnlichkeit zwischen Messwertgruppen G kann beispielsweise mittels mathematischer Verfahren geprüft werden, z.B. Faltung und/oder Kreuzkorrelation.

Zusätzlich zu der Bildung des Messwertverlaufs MK aus einer oder mehreren Messwertgruppen G können auch andere statistische Größen ermittelt und/oder durch Fachexpertise bestimmt werden, wie beispielsweise die Standardabweichung, die Varianz, usw. für unterschiedliche Zeitpunkte während der Zyklusdauer T.

In einem fünften Block 36 werden gespeicherte Muster X aus einem Musterspeicher 37 bereitgestellt. Die gespeicherten Muster X beinhalten bekannte Verläufe für die Messwerte des Arbeitsparameters P während eines Arbeitszyklus bei unterschiedlichen Arbeitsverfahren, die mittels der Vorrichtung 10 ausgeführt werden können. Die gespeicherten Muster X können trainiert und/oder durch maschinelles Lernen während des Betriebs der Vorrichtung 10 generiert und im Musterspeicher 37 abgespeichert werden.

Im sechsten Block 38 wird in Echtzeit ein Mustervergleich zwischen den bereitgestellten gespeicherten Mustern X und den Messwerten Mi im Messwertspeicher 32 ausgeführt. Stimmen die erfassten Messwerte Mi ausreichend genau mit einem gespeicherten Muster X überein, wird dieses gespeicherte Muster X als Arbeitsmuster W im sechsten Block 38 ausgewählt. Der sechste Block 38 kann beispielsweise durch ein sogenanntes Real-Time-Engine der Überwachungseinrichtung 19 gebildet sein.

Zur Durchführung des Mustervergleichs im sechsten Block 38 können bekannte Verfahren und Algorithmen zur Mustererkennung und/oder Musteranalyse verwendet werden, insbesondere basierend auf KI-Algorithmen unter Verwendung von Künstlicher Intelligenz (KI). Eine ausreichende Übereinstimmung wird beispielsgemäß festgestellt, wenn der zeitliche Verlauf der Messwerte Mi identisch ist mit dem Muster X und/oder ausreichend Ähnlichkeit damit hat.

In einem siebten Block 39 wird dann geprüft, ob die aktuellen Messwerte Mi aus dem aktuellen Arbeitszyklus oder einer vorgegebenen Anzahl der zuletzt ausgeführten Arbeitszyklen mit dem Arbeitsmuster W übereinstimmen oder ob eine Abweichung D vorliegt. Somit ist es möglich, Abweichungen in Echtzeit zu erkennen, wenn die aktuellen Messwerte Mi nicht mit dem Arbeitsmuster übereinstimmen.

Wenn eine Abweichung D zwischen den Messwerten Mi und dem Arbeitsmuster W ein Abweichungskriterium erfüllt, wird in einem achten Block 40 ein Ausgangssignal A ausgegeben, basierend auf dem eine weitere Maßnahme eingeleitet werden kann. Das Ausgangssignal kann das Ausgeben einer Mitteilung auslösen, beispielsweise über eine Bedienschnittstelle oder an eine Leitwarte. Zusätzlich oder alternativ kann das Ausgangssignal A auch eine automatische Bewertung der Abweichung D auslösen, so dass die Mitteilung beispielsweise eine Handlungsempfehlung für die Bedienperson und/oder die Leitwarte und/oder den Hersteller der Anlage (z.B. Verbesserung der Konstruktion) enthalten kann. Optional kann auch ein manuelles oder automatisches Korrigieren der Einstellungen des Arbeitsverfahrens bzw. der Vorrichtung 10 basierend auf dem Ausgangssignal A veranlasst werden, um die erkannte Abweichung D zu reduzieren oder zu eliminieren. Die Korrektur kann auf einem bekannten Zusammenhang zwischen der festgestellten Abweichung D und einer oder mehreren Einstellungen des Arbeitsverfahrens und/oder der Vorrichtung 10 basieren.

Zur Bewertung der Abweichung D im Hinblick auf die Erfüllung eines Abweichungskriteriums kann der Arbeitszyklus, beispielsweise basierend auf Fachexpertise, in mehrere Phasen unterteilt werden. Beispielsweise können bei einem Umformvorgang Phasen wie z.B. Zuführen eines Werkstücks (erste Phase I), Tiefziehen bzw. Umformen des Werkstücks (zweite Phase II) und Entnehmen des Werkstücks (dritte Phase III) unterschieden werden. Optional kann das Abtrennen eines Werkstückteils nach der zweiten Phase II als eine weitere Phase oder als Teil der dritten Phase III berücksichtigt werden. Die Beurteilung von zulässigen und unzulässigen Abweichungen und daraus abgeleitete Maßnahmen oder Handlungsempfehlungen können für die einzelnen Phasen verschieden sein, d.h. unterschiedlichen Phasen können unterschiedliche Abweichungskriterien zugeordnet sein.

Das Ausgangssignal A kann optional eine quantitative Information über die festgestellte Abweichung D aufweisen.

Die Abweichung D ist nicht zwingend nachteilig und muss nicht unbedingt korrigiert werden. Sie kann auch eine Verbesserung des bisherigen Arbeitsprozesses darstellen und dazu führen, dass basierend auf den aktuellen Einstellungen und dem sich daraus ergebenden zeitlichen Verlauf der Messwerte Mi des Arbeitsparameters P während eines Arbeitszyklus ein neues Muster erzeugt und als gespeichertes Muster X im Musterspeicher 37 abgelegt wird. Es kann zukünftig als Referenz bzw. Arbeitsmuster W für den Ablauf des aktuell durchgeführten Arbeitsprozesses verwendet werden.

Bei einem existenten Arbeitsmuster W und/oder darauffolgenden Anpassungen des Arbeitsmusters W muss ausgeschlossen werden, dass die Messwerte Mi nicht aufgrund von "Schein-Anomalien" (z.B. durch stark variierende Übermittlungs- oder Verzögerungsdauern, beispielsweise durch eine SPS) vom Arbeitsmuster W abweichen, und somit fälschlicherweise eine Abweichung erkannt wird. Um dies zu verhindern können die eingehenden Messwerte Mi ("Raw Data") zunächst im Rahmen vorgegebener Grenzen angepasst werden, beispielsweise der Zeitabstand zwischen zwei aufeinanderfolgenden Messwerten in der Messwert-Datenreihe verändert werden. Die Grenzen für die erlaubte Anpassung können beispielsweise aus vorliegenden Informationen ermittelt werden, beispielsweise statistischen Werten (wie etwa Mittelwert) für die Zeitdauer zwischen zwei Messwerten in der Messwert-Datenreihe. Es können also minimale Korrekturen, insbesondere der Zeitpunkte, denen die Messwerte zugeordnet werden, an das verwendete Arbeitsmuster W im erlaubten Rahmen der Ungenauigkeit durchgeführt werden.

Im Rahmen der Erfindung ist es möglich, mehrere korrelierte oder nicht korrelierte Messwerte unterschiedlicher Sensoren zu verwenden und wie vorstehend geschildert auszuwerten. Es kann bei der Beurteilung von Abweichungen miteinander korrelierter Messwerte erforderlich sein, dass die einzelnen Abweichungen vom jeweiligen Arbeitsmuster in Verbindung miteinander bewertet werden. Miteinander korrelierter Messwerte können beispielsweise technisch zusammenhängende Messwerte sein (z.B. Messwerte von mehreren über einer Fläche verteilt angeordneten Drucksensoren an einem Pressenstößel oder einem Pressenwerkzeug) und/oder anderweitig miteinander korrelieren (z.B. Messwertdatenlücken wegen übermäßiger Verzögerung des Empfangs eines Messwerts).

Um das Ergebnis der Auswertung zu verbessern, können korrelierte Messwerte beispielsweise nach wenigstens einem der folgenden Kriterien geprüft werden:
a) Es wird geprüft, ob die korrelierten Messwerte einen übereinstimmenden Trend aufweisen. Dadurch kann das Ergebnis verfeinert werden, wenn die korrelierten Messwerte einem gemeinsamen Trend folgen, sich also deren Änderungen nicht widersprechen, sondern vielmehr sozusagen übereinstimmen. Dies ist beispielsweise der Fall, wenn Druckspitzen an mehreren über eine Fläche eines Werkzeugs verteilt angeordneten Drucksensoren angezeigt werden. Auch kann dadurch das elektromagnetische Rauschen unterschieden werden von anderen Parametern, wie z.B. einem mechanischen Spiel oder einem Sensorfehler.
b) Es wird geprüft, ob die korrelierten Messwerte übereinstimmen, um Datenlücken zu identifizieren und dadurch wiederum fehlerhafte Ergebniss zu vermeiden. Beispielsweise kann anhand der Position eines Umformwerkzeugs (z.B. an einem Stößel und/oder Ziehkissen) ein zu erwarteter Druck von wenigstens einem Drucksensor am Werkzeug ermittelt und mit dem von dem wenigstens einem Drucksensor gemessenen Messwert verglichen werden. Dadurch können beispielsweise nicht oder verzögert übermittelte Messwerte erkannt werden.

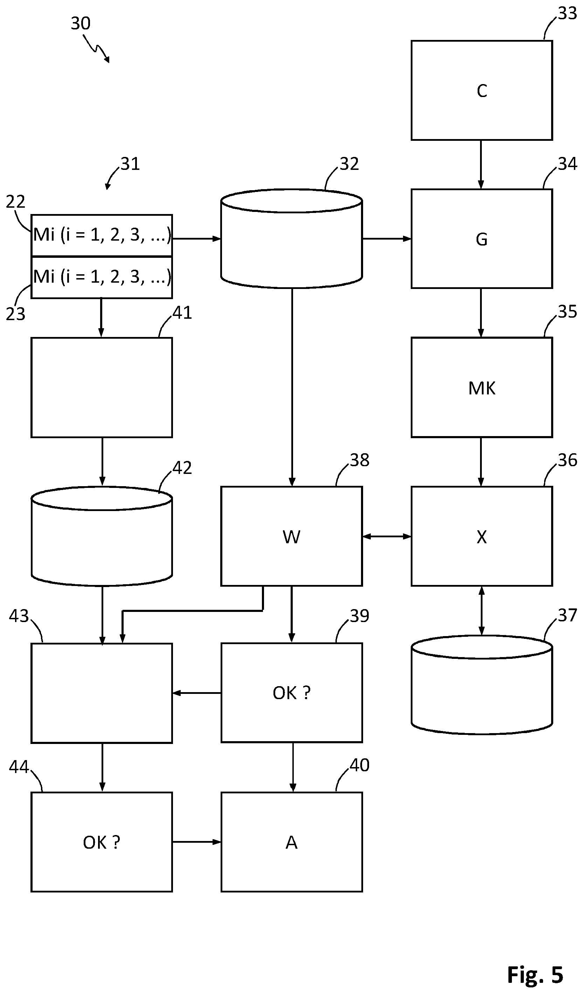

Figur 5 zeigt ein Blockschaltbild eines weiteren Ausführungsbeispiels eines Verfahrens. Die in den Figuren 4 und 5 dargestellten Blöcke weisen dieselben Funktionen auf, so dass auf das im Zusammenhang mit den Figuren 3 und 4 erläuterte Ausführungsbeispiel des Verfahrens verwiesen werden kann. Das Verfahren gemäß Figur 5 hat eine zusätzliche Funktionalität bzw. Erweiterung, auf die nachfolgend eingegangen wird. Im Übrigen kann das Verfahren nach irgendeinem der vorherstehenden Ausführungsbeispiele arbeiten.

Bei dem Verfahren 30 gemäß Figur 5 stammen die Messwerte Mi aus der ersten Messwertquelle 22 und der zweiten Messwertquelle 23. Optional können auch mehr als zwei unterschiedliche Messwertquellen vorhanden sein. Beispielsgemäß sind die Messzeitpunkte ti der Messwerte Mi der ersten Messwertquelle 22 nicht exakt bekannt, sondern lediglich deren Reihenfolge. Die Messwerte Mi der zweiten Messwertquelle 23 sind im Hinblick auf ihren Messzeitpunkt ti ausreichend genau bekannt, aber die Messzeitpunkte ti liegen zeitlich zu weit auseinander, so dass nicht genügend Messwerte Mi pro Zeiteinheit vorliegen.

Wie beim Ausführungsbeispiel gemäß Figur 4, werden die Messwerte Mi der ersten Messwertquelle 22 im Messwertspeicher 32 gespeichert und, wie im Zusammenhang mit Figur 4 erläutert, verarbeitet, um daraus ein Arbeitsmuster W zu generieren (sechster Block 38) und dieses zu bewerten (siebter Block 39) und ein Ausgangssignal A zu erzeugen (achter Block 40).

Zusätzlich weist das Verfahren nach Figur 5 einen neunten Block 41 auf, dem Messwerte Mi wenigstens einer weiteren Messwertquelle und beispielsgemäß der zweiten Messwertquelle 23 bereitgestellt werden. Die Messwerte Mi der zweiten Messwertquelle 23 sind hinsichtlich ihres Messzeitpunktes ti bekannt, jedoch ist der Abstand zwischen aufeinanderfolgenden Messzeitpunkten ti zu groß, so dass die Messwerte Mi der zweiten Messwertquelle 23 allein nicht für eine ausreichend genaue Auswertung herangezogen werden können.

Die Messwerte der zweiten Messwertquelle 23 werden in einem weiteren Messwertspeicher 42 gespeichert und für den Zugriff bereitgestellt. Die Messwerte Mi aus dem zweiten Messwertspeicher 42 können optional in einem zehnten Block 43 mit dem erzeugten Arbeitsmuster W abgeglichen und/oder kombiniert werden. Beispielsweise kann das Arbeitsmuster W durch die zusätzlichen Messwerte Mi aus dem weiteren Messwertspeicher 42 ergänzt und dadurch seine Genauigkeit erhöht werden, z.B. wenn im siebten Block 39 erkannt wird, dass die Genauigkeit des Arbeitsmusters W nicht hinreichend ist. Dies kann beispielsweise der Fall sein, wenn bei der Ermittlung des Arbeitsmusters W ein gespeichertes Muster X zugrunde gelegt wurde, das nur auf wenigen Lern- bzw. Trainingsdaten beruht und daher mit einer gewissen Unsicherheit bezüglich der Genauigkeit behaftet ist. Dann kann aus dem siebten Block 39 in den zehnten Block 43 verzweigt werden.

Wird im zehnten Block 43 festgestellt, dass keine ausreichende Übereinstimmung der zusätzlichen Messwerte Mi aus dem weiteren Messwertspeicher 42 mit dem erzeugten Arbeitsmuster W gegeben ist, kann das Arbeitsmuster W unverändert verwendet werden. Ansonsten werden die Messwerte Mi aus dem zweiten Messwertspeicher 42 im zehnten Block 43 mit dem erzeugten Arbeitsmuster W abgeglichen und/oder kombiniert, um dessen Genauigkeit zu erhöhen.

Wenn für einen Messzeitpunkt ti Messwerte Mi aus zwei, drei oder mehr Messwertquellen im weiteren Messwertspeicher 42 zur Verfügung stehen, können auch mathematische oder statistische Verfahren verwendet werden, um das erzeugte Arbeitsmuster W zu prüfen und gegebenenfalls zu korrigieren. Wenn beispielsweise zwei oder mehr mit guter Genauigkeit übereinstimmende Messwerte Mi im weiteren Messwertspeicher 42 zur Verfügung stehen, die jedoch von dem Arbeitsmuster W abweichen, kann das Arbeitsmuster W in Bezug auf den betreffenden Messzeitpunkt ti korrigiert werden. Bei der Verwendung der zusätzlichen Messwerte aus dem weiteren Messwertspeicher 42 stehen im Prinzip alle bekannten Verfahren und Methoden zur Verifizierung und/oder Korrektur des Arbeitsmusters W zur Verfügung.

Wenn die zusätzlichen Messwerte aus dem weiteren Messwertspeicher 42 für einen oder mehrere Zeitpunkte des Arbeitszyklusses vom Arbeitsmuster W zu stark abweichen und keine Informationen vorliegen, ob der Messwert der ersten Messwertquelle 22 oder der zweiten Messwertquelle 23 für die betreffenden Zeitpunkte wahrscheinlicher ist, können die Messwerte der ersten Messwertquelle 22 verwendet werden, auf denen das Arbeitsmuster W beruht. Das Arbeitsmuster W bleibt dann insbesondere unverändert. Nur wenn Informationen vorliegen, wonach der zweiten Messwertquelle 23 für die betreffenden Zeitpunkte mit einer höheren Wahrscheinlichkeit genauer ist als der Messwert der ersten Messwertquelle 22, wird beispielsgemäß eine Korrektur bzw. Änderung des Arbeitsmusters W durchgeführt.

Das korrigierte bzw. in seiner Genauigkeit verbesserte Arbeitsmuster W wird anschließend einen elften Block 44 übermittelt, dessen Funktion dem siebten Block 39 entspricht. Dort kann dann geprüft werden, ob die aktuellen Messwerte Mi, insbesondere die der ersten Messwertquelle 22, mit dem Arbeitsmuster W übereinstimmen oder ob eine Abweichung D vorliegt. Abhängig davon wird dann im achten Block 40 das Ausgangssignal A ausgegeben, wie es vorstehend im Zusammenhang mit Figur 4 erläutert wurde.

Die aus den unterschiedlichen Messwertquellen 22, 23 stammenden Messwerte Mi beschreiben jeweils denselben zu messenden Arbeitsparameter, beispielsweise eine Stößelposition, eine Presskraft oder dergleichen. Die Verfahren gemäß der Figuren 4 und 5 können für mehrere oder alle zu messenden Arbeitsparameter durchgeführt werden, deren Messwerte eine Unsicherheit aufweisen.

Der Zweig des in Figur 5 dargestellten Verfahrens bestehend aus einer weiteren Messwertquelle, dem neunten Block 41, dem weiteren Messwertspeicher 42, dem zehnten Block 43 und dem elften Block 44 kann separat für jede weitere verfügbare Messwertquelle vorhanden sein. Alternativ oder zusätzlich können auch mehrere weitere Messwertquellen in einem gemeinsamen Zweig mit dem neunten Block 41 verbunden sein.

Die Erfindung betrifft ein Verfahren 30 zur Durchführung eines zyklischen Arbeitsprozesses mit mehreren aufeinanderfolgenden Arbeitszyklen sowie eine Vorrichtung 10 zur Durchführung eines zyklischen Arbeitsprozesses mit einer Überwachungseinrichtung 19, die zur Durchführung des Verfahrens 30 zur Überwachung des Arbeitsprozesses eingerichtet ist. Erfasste Messwerte Mi, die einen Arbeitsparameter P beschreiben, werden in einer bekannten zeitlichen Reihenfolge erfasst, wobei der exakte Messzeitpunkt für die Messwerte Mi unbekannt ist. Die Messwerte Mi werden gruppiert und es wird wenigstens eine Messwertgruppe G von Messwerte Mi gebildet, die einem gemeinsamen Arbeitszyklus des zyklischen Arbeitsprozesses zugeordnet werden. Basierend auf dieser wenigstens einen Messwertgruppe G wird ein Messwertverlauf MK für die Zyklusdauer T eines einzigen Arbeitszykluses gebildet. Vorzugsweise werden hierfür mehrere Messwertgruppen G verwendet. Basierend auf dem Messwertverlauf MK können bekannte, gespeicherte Muster X zum Vergleich herangezogen werden, um ein Arbeitsmuster W aus den gespeicherten Muster X auszuwählen und als Referenz zu verwenden. Mit diesem Arbeitsmuster W können die aktuellen Messwerte Mi zumindest des aktuell ablaufenden Arbeitszyklus in Echtzeit verglichen werden, um Abweichungen zwischen den erfassten Messwerten Mi und dem Arbeitsmuster W zu ermitteln. Wenn derartige Abweichungen erkannt wurden, kann wenigstens eine Maßnahme eingeleitet werden, beispielsweise das Ausgeben einer Meldung über das Erkennen einer Abweichung oder das Ausgeben von weiteren Handlungsempfehlungen. Auch eine automatisierte Änderung oder Korrektur der aktuellen Einstellungen des Arbeitsverfahrens bzw. der Vorrichtung 10 können eine Maßnahme sein. Zur Prüfung und/oder Korrektur und/oder Erhöhung der Genauigkeit des Arbeitsmusters W können auch Messwerte Mi aus unterschiedlichen Messwertquellen 22, 23 verwendet und beispielsweise miteinander kombiniert werden.

### Bezugszeichenliste:

- 10: Vorrichtung
- 11: Presse
- 12: Werkstück
- 13: Stößel
- 14: Pressenantrieb
- 15: erstes Werkzeug
- 16: zweites Werkzeug
- 17: Elektromotor
- 18: erster Sensor
- 19: Überwachungseinrichtung
- 20: zweiter Sensor
- 21: dritter Sensor
- 22: erste Messwertquelle
- 23: zweite Messwertquelle

- 30: Verfahren
- 31: erster Block
- 32: Messwertspeicher
- 33: zweiter Block
- 34: dritter Block
- 35: vierter Block
- 36: fünfter Block
- 37: Musterspeicher
- 38: sechster Block
- 39: siebter Block
- 40: achter Block
- 41: neunter Block
- 42: weiteren Messwertspeicher
- 43: zehnter Block
- 44: elfter Block
- I: erste Phase
- II: zweite Phase
- III: dritte Phase

- A: Ausgangssignal
- C: Zyklussignal
- D: Abweichung
- G: Messwertgruppe
- Mi: Messwert zum Messzeitpunkt ti
- MK: Messwertverlauf
- P: Arbeitsparameter
- S1: erstes Sensorsignal
- S2: zweites Sensorsignal
- S3: drittes Sensorsignal
- T: Zyklusdauer
- t1: erster Zeitpunkt
- t2: zweiter Zeitpunkt
- t3: dritter Zeitpunkt
- ti: Messzeitpunkt des Messwertes Mi
- W: Arbeitsmuster
- X: gespeicherte Muster

## Patentansprüche

1. Verfahren zur Überwachung eines zyklischen Arbeitsprozesses mit folgenden Schritten:
- Erfassen von Messwerten (Mi) für einen sich während des zyklischen Arbeitsprozesses ändernden Arbeitsparameter (P) und Bereitstellen der Messwerte (Mi) von einer ersten Messwertquelle (22), wobei die zeitliche Reihenfolge der Messwerte (Mi) bekannt ist, der Messzeitpunkt (ti) der Messwerte (Mi) aber unbekannt ist,
- Ermitteln jeweils eines Zyklusbeginns und eines Zyklusendes wenigstens eines der Arbeitszyklen des zyklischen Arbeitsprozesses basierend auf den Messwerten (Mi) und/oder basierend auf einem den zeitlichen Verlauf des zyklischen Arbeitsprozesses steuernden Zyklussignal (C),
- Bilden wenigstens eines Messwertverlauf (MK) basierend auf wenigstens einer Messwertgruppe (G) aus den Messwerten (Mi), wobei jede Messwertgruppe (G) die Messwerte (Mi) zwischen dem ermittelten Zyklusbeginn und dem ermittelten Zyklusende eines der Arbeitszyklen enthält,
- Vergleichen des Messwertverlaufs (MK) mit gespeicherten Mustern (X),
**gekennzeichnet durch** die Schritte:
- Auswählen eines gespeicherten Musters (X) als Arbeitsmuster (W), wenn basierend auf dem Messwertverlauf (MK) eine ausreichende Übereinstimmung mit einem gespeicherten Muster (X) festgestellt wurde,
- Vergleichen der erfassten Messwerte (Mi) in Echtzeit mit dem Arbeitsmuster (W),
- Prüfen in Echtzeit, ob eine Abweichung (D) zwischen den erfassten Messwerten (Mi) und dem Arbeitsmuster (W) vorliegt und Erzeugen und Ausgegeben eines Ausgangssignals (A), wenn eine Abweichung (D) zwischen den Messwerten (Mi) und dem Arbeitsmuster (W) ermittelt wurde, die ein vorgegebenes Abweichungskriterium erfüllt.

2. Verfahren nach Anspruch 1, wobei das Verfahren zur Bearbeitung von Werkstücken (12) eingerichtet ist.

3. Verfahren nach Anspruch 1 oder 2, wobei das Verfahren zum Umformen von Werkstücken (12) und/oder zum Abtrennen von wenigstens einem Werkstückteil eingerichtet ist.

4. Verfahren nach einem der vorhergehenden Ansprüche, wobei das Bilden des Messwertverlaufs (MK) basierend auf wenigstens einer Messwertgruppe (G) das Unterteilen der erfassten Messwerte (Mi) in mehrere Messwertgruppen (G) umfasst.

5. Verfahren nach Anspruch 4, wobei das Bilden des Messwertverlaufs (MK) basierend auf den Messwerten (Mi) von wenigstens zwei oder sämtlichen der mehreren Messwertgruppen (G) erfolgt.

6. Verfahren nach Anspruch 5, wobei aus den Messwerten (Mi) von wenigstens zwei oder sämtlichen der mehreren Messwertgruppen (G) ein zeitlicher Verlauf eines Mittelwertes der Messwerte (Mi) als Messwertverlauf (MK) während einer Zyklusdauer (T) des Arbeitszyklus ermittelt wird.

7. Verfahren nach Anspruch 6, wobei der zeitliche Verlauf des Mittelwertes mittels einer Regressionsanalyse ermittelt wird, solange die erfassten Messwerte (Mi) ein vorgegebenes Datenkriterium nicht erfüllen.

8. Verfahren nach Anspruch 6 oder 7, wobei der zeitliche Verlauf des Mittelwertes mittels gleitender Mittelwertbildung ermittelt wird, wenn die erfassten Messwerte (Mi) ein vorgegebenes Datenkriterium erfüllen.

9. Verfahren nach einem der Ansprüche 5 bis 8, wobei der Messwertverlauf (MK) dazu verwendet wird, ein zusätzliches Muster als Arbeitsmuster (W) zu erzeugen, wenn der Vergleich mit den gespeicherten Mustern (X) keine ausreichende Übereinstimmung ergeben hat.

10. Verfahren nach einem der vorhergehenden Ansprüche, wobei die erfassten Messwerte (Mi) in einem Messwertspeicher (32) gespeichert werden.

11. Verfahren nach Anspruch 9, wobei die im Messwertspeicher (32) gespeicherten Messwerte (Mi) für den Vergleich in Echtzeit der erfassten Messwerte (Mi) mit dem Arbeitsmuster (W) verwendet werden.

12. Verfahren nach Anspruch 1, wobei das Ausgangssignal (A) eine Mitteilung enthält oder auslöst, die an eine Bedienschnittstelle und/oder eine Leitwarte übermittelt wird.

13. Verfahren nach Anspruch 12, wobei die Mitteilung eine Handlungsempfehlung enthält.

14. Verfahren nach einem der vorhergehenden Ansprüche, wobei zusätzlich zu den von der ersten Messwertquelle (22) bereitgestellten Messwerten (Mi) zusätzliche Messwerte (Mi) von einer von der ersten Messwertquelle (22) unabhängigen zweiten Messwertquelle (23) für denselben Arbeitsparameter (P) erfasst werden, wobei das Arbeitsmuster (W) basierend auf den zusätzlichen Messwerten (Mi) der zweiten Messwertquelle (23) geprüft und/oder geändert wird.

15. Vorrichtung (10) zur Durchführung eines zyklischen Arbeitsprozesses aufweisend eine Überwachungseinrichtung (19), die dazu eingerichtet ist, zur Überwachung des zyklischen Arbeitsprozesses folgende Schritte auszuführen:
- Erfassen von Messwerten (Mi) für einen sich während des zyklischen Arbeitsprozesses ändernden Arbeitsparameter (P), wobei die zeitliche Reihenfolge der Messwerte (Mi) bekannt ist, der Messzeitpunkt (ti) der Messwerte (Mi) aber unbekannt ist,
- Ermitteln jeweils eines Zyklusbeginns und eines Zyklusendes mehrerer Arbeitszyklen des zyklischen Arbeitsprozesses basierend auf den Messwerten (Mi) und/oder basierend auf einem den zeitlichen Verlauf des zyklischen Arbeitsprozesses steuernden Zyklussignal (C),
- Bilden wenigstens eines Messwertverlauf (MK) basierend auf wenigstens einer Messwertgruppe (G) aus den Messwerten (Mi), wobei jede Messwertgruppe (G) die Messwerte (Mi) zwischen dem ermittelten Zyklusbeginn und dem ermittelten Zyklusende eines der Arbeitszyklen enthält,
- Vergleichen des Messwertverlaufs (MK) mit gespeicherten Mustern (X), **dadurch gekennzeichnet, dass** die Überwachungseinrichtung eingerichtet ist, zur Überwachung des zyklischen Arbeitsprozesses folgende Schritte auszuführen:
- Auswählen eines gespeicherten Musters (X) als Arbeitsmuster (W), wenn basierend auf dem Messwertverlauf (MK) eine ausreichende Übereinstimmung mit einem gespeicherten Muster (X) festgestellt wurde,
- Vergleichen der erfassten Messwerte (Mi) in Echtzeit mit dem Arbeitsmuster (W),
- Prüfen in Echtzeit, ob eine Abweichung (D) zwischen den erfassten Messwerten (Mi) und dem Arbeitsmuster (W) vorliegt und Erzeugen und Ausgegeben eines Ausgangssignals (A), wenn eine Abweichung (D) zwischen den Messwerten (Mi) und dem Arbeitsmuster (W) ermittelt wurde, die ein vorgegebenes Abweichungskriterium erfüllt.

## Claims

1. Method for monitoring a cyclic working process having the following steps:
- Detecting of measurements (Mi) for an operation parameter (P) that changes during the cyclic working process and providing the measurements (Mi) of a first measurement source (22), wherein the temporal sequence of the measurements (Mi) is known, however the measurement point in time (ti) of the measurements (Mi) is unknown,
- Determining a cycle start and a cycle end respectively of at least one of the working cycles of the cyclic working process based on the measurements (Mi) and/or based on a cycle signal (C) that controls the temporal progress of the cyclic working process,
- Determining at least one measurement progress (MK) based on at least one measurement group (G) of the measurements (Mi), wherein each measurement group (G) comprises the measurements (Mi) between the determined cycle start and the determined cycle end of one of the working cycles,
- Comparing the measurement progress (MK) with stored patterns (X),
**characterized by** the following steps:
- Selecting a stored pattern (X) as work pattern (W) if based on the measurement progress (MK) a sufficient match with a stored pattern (X) has been determined,
- Comparing the detected measurements (Mi) in real time with the work pattern (W),
- Checking in real time, whether a deviation (D) between the detected measurements (Mi) and the work pattern (W) exists and creating and outputting an output signal (A) if a deviation (D) between the measurements (Mi) and the work pattern (W) has been determined that complies with a predefined deviation criterion.

2. Method according to claim 1, wherein the method is configured for processing of workpieces (12).

3. Method according to claim 1 or 2, wherein the method is configured for deforming workpieces (12) and/or for cutting off at least one workpiece part.

4. Method according to any of the preceding claims, wherein the determination of the measurement progress (MK) based on the at least one measurement group (G) comprises the subdivision of the detected measurements (Mi) in multiple measurement groups (G).

5. Method according to claim 4, wherein the determination of the measurement progress (MK) is based on the measurements (Mi) of at least two or all of the multiple measurement groups (G).

6. Method according to claim 5, wherein from the measurements (Mi) of at least two or all of the multiple measurement groups (G) a temporal progress of an average of the measurements (Mi) is determined as measurement progress (MK) during a cycle period (T) of the working cycle.

7. Method according to claim 6, wherein the temporal progress of the average is determined by means of a regression analysis as long as the detected measurements (Mi) do not comply with the predefined data criterion.

8. Method according to claim 6 or 7, wherein the temporal progress of the average is determined by means of floating average determination if the detected measurements (Mi) comply with a predefined data criterion.

9. Method according to any of the claims 5 to 8, wherein the measurement progress (MK) is used to create an additional pattern as work pattern (W) if the comparison with the stored patterns (X) did not result in a sufficient match.

10. Method according to any of the preceding claims, wherein the detected measurements (Mi) are stored in a measurement memory (32).

11. Method according to claim 9, wherein measurements (Mi) stored in the measurement memory (32) are used for the comparison in real time of the detected measurements (Mi) with the work pattern (W).

12. Method according to claim 1, wherein the output signal (A) comprises or triggers a notification that is transmitted to a user interface and/or a control room.

13. Method according to claim 12, wherein the notification comprises a recommendation for action.

14. Method according to any of the preceding claims, wherein in addition to the measurements (Mi) provided by the first measurement source (22), additional measurements (Mi) for the same operation parameter (P) are detected from a second measurement source (23), which is independent from the first measurement source (22), wherein the work pattern (W) is checked and/or changed based on the additional measurements (Mi) of the second measurement source (23).

15. Device (10) for carrying out a cyclic working process comprising a monitoring device (19) that is configured to carry out the following steps for monitoring the cyclic working process:
- Detecting of measurements (Mi) for an operation parameter (P) that changes during the cyclic working process and providing the measurements (Mi) of a first measurement source (22), wherein the temporal sequence of the measurements (Mi) is known, however the measurement point in time (ti) of the measurements (Mi) is unknown,
- Determining a cycle start and a cycle end respectively of at least one of the working cycles of the cyclic working process based on the measurements (Mi) and/or based on a cycle signal (C) that controls the temporal progress of the cyclic working process,
- Determining at least one measurement progress (MK) based on at least one measurement group (G) of the measurements (Mi), wherein each measurement group (G) comprises the measurements (Mi) between the determined cycle start and the determined cycle end of one of the working cycles,
- Comparing the measurement progress (MK) with stored patterns (X),
**characterized in that** the monitoring device is configured to carry out the following steps for monitoring the cyclic working process:
- Selecting a stored pattern (X) as work pattern (W) if based on the measurement progress (MK) a sufficient match with a stored pattern (X) has been determined,
- Comparing the detected measurements (Mi) in real time with the work pattern (W),
- Checking in real time, whether a deviation (D) between the detected measurements (Mi) and the work pattern (W) exists and creating and outputting an output signal (A) if a deviation (D) between the measurements (Mi) and the work pattern (W) has been determined that complies with a predefined deviation criterion.

## Revendications

1. Procédé de surveillance d'un processus de travail cyclique avec les étapes suivantes :
- l'acquisition de valeurs de mesure (Mi) pour un paramètre de travail (P) changeant pendant le processus de travail cyclique et la fourniture des valeurs de mesure (Mi) à partir d'une première source de valeurs de mesure (22), dans lequel l'ordre chronologique des valeurs de mesure (Mi) est connu, mais le moment de mesure (ti) des valeurs de mesure (Mi) est inconnu,
- la détermination de respectivement un début de cycle et une fin de cycle d'au moins un des cycles de travail du processus de travail cyclique sur la base des valeurs de mesure (Mi) et/ou sur la base d'un signal de cycle (C) commandant le déroulement temporel du processus de travail cyclique,
- la formation d'au moins un tracé de valeurs de mesure (MK) sur la base d'au moins un groupe de valeurs de mesure (G) à partir des valeurs de mesure (Mi), dans lequel chaque groupe de valeurs de mesure (G) contient les valeurs de mesure (Mi) entre le début de cycle déterminé et la fin de cycle déterminée d'un des cycles de travail,
- la comparaison du tracé de valeurs de mesure (MK) avec des modèles enregistrés (X),
**caractérisé par** les étapes :
- de sélection d'un modèle enregistré (X) en tant que modèle de travail (W), si, sur la base du tracé de valeurs de mesure (MK), une concordance suffisante avec un modèle enregistré (X) a été constatée,
- de comparaison en temps réel des valeurs de mesure (Mi) acquises avec le modèle de travail (W),
- de vérification en temps réel s'il existe un écart (D) entre les valeurs de mesure (Mi) acquises et le modèle de travail (W) et de génération et d'émission d'un signal de sortie (A) lorsqu'un écart (D) entre les valeurs de mesure (Mi) et le modèle de travail (W) qui remplit un critère d'écart prédéfini a été déterminé.

2. Procédé selon la revendication 1, dans lequel le procédé est configuré pour l'usinage de pièces (12).

3. Procédé selon la revendication 1 ou 2, dans lequel le procédé est configuré pour le formage de pièces (12) et/ou pour le sectionnement d'au moins une partie de pièce.

4. Procédé selon l'une quelconque des revendications précédentes, dans lequel la formation du tracé de valeurs de mesure (MK) sur la base d'au moins un groupe de valeurs de mesure (G) comprend la subdivision des valeurs de mesure (Mi) acquises en plusieurs groupes de valeurs de mesure (G).

5. Procédé selon la revendication 4, dans lequel la formation du tracé de valeurs de mesure (MK) est effectuée sur la base des valeurs de mesure (Mi) d'au moins deux ou de l'ensemble des plusieurs groupes de valeurs de mesure (G).

6. Procédé selon la revendication 5, dans lequel une variation dans le temps d'une valeur moyenne des valeurs de mesure (Mi) en tant que tracé de valeurs de mesure (MK) pendant une durée de cycle (T) du cycle de travail est déterminée à partir des valeurs de mesure (Mi) d'au moins deux ou de l'ensemble des plusieurs groupes de valeurs de mesure (G).

7. Procédé selon la revendication 6, dans lequel la variation dans le temps de la valeur moyenne est déterminée au moyen d'une analyse de régression tant que les valeurs de mesure (Mi) acquises ne répondent pas à un critère de données prédéfini.

8. Procédé selon la revendication 6 ou 7, dans lequel la variation dans le temps de la valeur moyenne est déterminée par formation d'une valeur moyenne glissante lorsque les valeurs de mesure (Mi) acquises répondent à un critère de données prédéfini.

9. Procédé selon l'une quelconque des revendications 5 à 8, dans lequel le tracé de valeurs de mesure (MK) est utilisé pour générer un modèle supplémentaire en tant que modèle de travail (W) lorsque la comparaison avec les modèles enregistrés (X) n'a pas donné une concordance suffisante.

10. Procédé selon l'une quelconque des revendications précédentes, dans lequel les valeurs de mesure (Mi) acquises sont enregistrées dans une mémoire de valeurs de mesure (32).

11. Procédé selon la revendication 9, dans lequel les valeurs de mesure (Mi) enregistrées dans la mémoire de valeurs de mesure (32) sont utilisées pour la comparaison en temps réel des valeurs de mesure (Mi) acquises avec le modèle de travail (W).

12. Procédé selon la revendication 1, dans lequel le signal de sortie (A) contient ou déclenche un message qui est transmis à une interface opérateur et/ou à une salle de commande.

13. Procédé selon la revendication 12, dans lequel le message contient une recommandation d'action.

14. Procédé selon l'une quelconque des revendications précédentes, dans lequel, en plus des premières valeurs de mesure (Mi) fournies par la première source de valeurs de mesure (22), des valeurs de mesure (Mi) supplémentaires sont acquises à partir d'une deuxième source de valeurs de mesure (23) indépendante de la première source de valeurs de mesure (22) pour le même paramètre de travail (P), dans lequel le modèle de travail (W) est vérifié et/ou modifié sur la base des valeurs de mesure (Mi) supplémentaires de la deuxième source de valeurs de mesure (23).

15. Dispositif (10) de mise en œuvre d'un processus de travail cyclique présentant un système de surveillance (19) qui est configuré pour exécuter les étapes suivantes pour surveiller le processus de travail cyclique :
- l'acquisition de valeurs de mesure (Mi) pour un paramètre de travail (P) variant pendant le processus de travail cyclique, dans lequel l'ordre chronologique des valeurs de mesure (Mi) est connu, mais le moment de mesure (ti) des valeurs de mesure (Mi) est inconnu,
- la détermination de respectivement un début de cycle et une fin de cycle de plusieurs cycles de travail du processus de travail cyclique sur la base des valeurs de mesure (Mi) et/ou sur la base d'un signal de cycle (C) commandant le déroulement temporel du processus de travail cyclique,
- la formation d'au moins un tracé de valeurs de mesure (MK) sur la base d'au moins un groupe de valeurs de mesure (G) à partir des valeurs de mesure (Mi), dans lequel chaque groupe de valeurs de mesure (G) contient les valeurs de mesure (Mi) entre le début de cycle déterminé et la fin de cycle déterminée d'un des cycles de travail,
- la comparaison du tracé de valeurs de mesure (MK) avec les modèles enregistrés (X), **caractérisé en ce que** le système de surveillance est configuré pour exécuter les étapes suivantes pour surveiller le processus de travail cyclique :
- la sélection d'un modèle enregistré (X) en tant que modèle de travail (W), si, sur la base du tracé de valeurs de mesure (MK), une concordance suffisante avec un modèle enregistré (X) a été constatée,
- de comparaison en temps réel des valeurs de mesure (Mi) acquises avec le modèle de travail (W),
- de vérification en temps réel s'il existe un écart (D) entre les valeurs de mesure (Mi) acquises et le modèle de travail (W) et de génération et d'émission d'un signal de sortie (A) lorsqu'un écart (D) entre les valeurs de mesure (Mi) et le modèle de travail (W) qui remplit un critère d'écart prédéfini a été déterminé.
